# EUROPÄISCHE PATENTSCHRIFT

(11) **EP 2 085 793 B1**
(45) Veröffentlichungstag und Bekanntmachung des Hinweises auf die Patenterteilung: **09.09.2015**
(21) Anmeldenummer: 08020412.6
(22) Anmeldetag: 25.11.2008
(51) Int. Cl.: G01S 15/93, B60W 30/06

(54) **Verfahren und Vorrichtung zur Flankenerkennung von eine Parklücke begrenzenden Objekten**
Method and device for detects the edge of objects limited by a parking space
Procédé et dispositif destinés à la reconnaissance de flancs d'un espace de stationnement délimité par des objets

(30) Priorität: 30.01.2008 DE 102008006586
(43) Veröffentlichungstag der Anmeldung: 05.08.2009
(73) Patentinhaber: Valeo Schalter und Sensoren GmbH, 74321 Bietigheim-Bissingen (DE)
(72) Erfinder: Barth, Harald, 70825 Korntal-Münchingen (DE)

(56) Entgegenhaltungen:
- DE-A1- 10 325 709
- DE-A1-102004 035 539

## Beschreibung

### Stand der Technik

Die Erfindung betrifft ein Verfahren zur Flankenerkennung von eine Parklücke begrenzenden Objekten vorzugsweise mit Sensoren für ein Fahrassistenzsystem vorzugsweise mit Ultraschallsensoren gemäß dem Oberbegriff des Anspruchs 1, sowie ein Computerprogrammprodukt gemäß dem Oberbegriff des Anspruchs 5.

Bekannte Fahrassistenzvorrichtungen zur Unterstützung eines Fahrers eines Fahrzeugs beim Einparken, im Folgenden kurz als Einparksysteme bezeichnet, helfen dem Fahrer aktiv in eine Parklücke seitlich zur Fahrbahn einzuparken. Dabei vermisst das Einparksystem mit beispielsweise seitlich am Fahrzeug angebrachten Sensoren eine mögliche Parklücke, berechnet aus den Lückendaten eine Einparktrajektorie und steuert das Fahrzeug beispielsweise durch aktiven Lenkeingriff oder durch Fahranweisungen an den Fahrer in die Parklücke. Während des Einparkvorgangs bzw. beim Einparken wird die Distanz zu die Parklücke begrenzenden Objekten durch Ultraschallsensoren, sogenannte UPA-Sensoren (Ultrasonic Park Assist Sensoren) überwacht.

Eine wesentliche Eigenschaft des Einparksystems innerhalb der Parklückenerkennung ist dabei die sogenannte Flankenerkennung, welche wesentlich zur Erkennung von Lückenanfang und -ende ist. Die Flanke wird dabei ausschließlich aus dem Signalverlauf der Abstandssignale der die Parklücke begrenzenden Objekte ermittelt. Diese Ermittlung erfüllt keine hohen Anforderungen an die Genauigkeit. Insbesondere kommt es durch Streuungen der Flankenerkennung bzw. des Flankenverlaufs in die Parklücke hinein zu Fehlern, die die Parklücke verkürzt erscheinen lassen, also scheinbar noch ein Objekt an einer Stelle vorhanden ist, wo bereits eine Parklücke beginnt bzw. vorhanden ist.

Aus der DE 103 25 709 A1 ist ein Verfahren zur Erkennung des Konturverlaufs eines eine Parklücke begrenzenden Hindernisses mittels eines Ultraschallsensors bekannt. Dabei wird zur Erhöhung der Messgenauigkeit die Auswertung von Reflexionssignalen höherer Ordnung vorgeschlagen.

Die DE 10 2004 035 539 A1 beschreibt ein Verfahren zur Erkennung von freien Parklücken, bei dem über eine Sensoranordnung freie Bereiche in der Umgebung des Fahrzeugs detektiert werden. Dabei werden zusätzlich Informationen über die Höhe eines an den freien Bereich angrenzenden Bordsteins derart ausgewertet, dass bei einem abgesenkten Bordstein keine Parklücke erkannt wird.

Als eine Aufgabe der Erfindung kann es deshalb angesehen werden, ein Verfahren zu entwickeln, welches die Genauigkeit der Flankenerkennung steigert.

### Offenbarung der Erfindung

Die Aufgabe wird gelöst durch ein Verfahren nach Anspruch 1 zur Flankenerkennung von eine Parklücke begrenzenden Objekten vorzugsweise durch Ultraschallsensoren, bei dem ein Signalverlauf von Abstandssignalen von die Parklücke begrenzenden Objekten ermittelt wird. Erfindungsgemäß ist dabei vorgesehen, dass eine Plausibilisierung der Flankenerkennung anhand eines Bordsteinsignals durchgeführt wird, indem neben dem Signalverlauf der Abstandssignale von eine Parklücke begrenzenden Objekten zusätzlich ein Signalverlauf von Abstandssignalen eines Bordsteins bzw. einer Bordsteinkante zur Plausibilisierung betrachtet bzw. verwendet wird.

Vorteile der Erfindung gegenüber dem Stand der Technik ergeben sich insbesondere dadurch, dass zur Flankenerkennung erhobene Sensordaten noch besser und geschickter genutzt werden, wodurch eine höhere Systemgenauigkeit als beim Stand der Technik erreicht wird. Weitere Vorteile ergeben sich unter anderem dadurch, dass das Streuen der Flankenerkennung bzw. des Flankenverlaufs in die Parklücke hinein bei Lücken mit Bordstein begrenzt werden kann. Dadurch kann der vorhandene Parkraum besser genutzt werden, was insbesondere bei kurzen Parklücken von großem Vorteil ist. Dadurch wird die Genauigkeit eines Einparksystems insgesamt verbessert.

Zur Betrachtung des Signalverlaufs der Abstandssignale des Bordsteins bzw. der Bordsteinkante werden vorzugsweise auch so genannte höhere Echos von von den Ultraschallsensoren ausgesandten und von den die Parklücke begrenzenden Objekten und dem Bordstein bzw. der Bordsteinkante reflektierten Ultraschallwellen verwendet, um den Verlauf des Bordsteins bzw. der Bordsteinkante in seiner bzw. ihrer ganzen Länge zur Plausibilisierung zu nutzen, also auch dann, wenn dieser bzw. diese im Verlauf von ersten Echos durch die Echosignale der die Parklücke begrenzenden Objekte verdeckt wird.

Das erfindungsgemäße Verfahrens sieht vor, dass der Flankenverlauf zunächst anhand des Signalverlaufs der Abstandssignale der die Parklücke begrenzenden Objekte ermittelt wird, anschließend ein Bordstein bzw. eine Bordsteinkante ermittelt wird, dann überprüft wird, wie weit dessen bzw. deren Verlauf im Signalverlauf zu sehen ist, und sofern die ermittelte Flanke im Bereich des sichtbaren Bordsteins liegt, die Flanke an die Grenze des Bordsteinsignals verschoben wird, und sofern die ermittelte Flanke außerhalb des Bereichs des sichtbaren Bordsteins liegt, die Flanke unverändert bleibt.

Dabei werden zur Überprüfung, wie weit der Verlauf des Bordsteins bzw. der Bordsteinkante im Signalverlauf zu sehen ist, vorzugsweise sowohl die ersten, als auch höhere Echos berücksichtigt.

Die Erfindung ist insbesondere in Verbindung mit einer Fahrassistenzvorrichtung vorteilhaft anwendbar, beispielsweise einer Fahrassistenzvorrichtung zur Unterstützung eines Fahrers eines Fahrzeuges beim Einparken in eine Parklücke. Eine solche Fahrassistenzvorrichtung umfasst vorzugsweise Ultraschallsensoren zur Vermessung und Erfassung von eine Parklücke begrenzenden Objekten und eines Bordsteins bzw. einer Bordsteinkante, sowie einen mit den Ultraschallsensoren verbundenen Mikroprozessor mit zugehörigen Speichermitteln zur Flankenerkennung durch Berechnung eines Signalverlaufs anhand von Abstandssignalen der die Parklücke begrenzenden Objekte und zur Plausibilisierung des Flankenverlaufs durch Berechnung eines Signalverlauf von Abstandssignalen eines Bordsteins bzw. einer Bordsteinkante.

Eine vorteilhafte Anwendung des erfindungsgemäßen Verfahrens ergibt sich in Verbindung mit einer Fahrassistenzvorrichtung, welche ein geführtes Einparken, ein halbautomatisches Einparken oder ein vollautomatisches Einparken ermöglicht.

Eine besonders vorteilhafte Ausgestaltung der Erfindung betrifft ein Computerprogrammprodukt nach Anspruch 5 gespeichert auf einem computerverwendbaren Medium, umfassend computerlesbare Programmschritte, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung.

Die Erfindung wird nachfolgend anhand der Figuren der Zeichnung erläutert. Dabei zeigen:
- Fig. 1: Eine schematische Darstellung einer Parksituation mit einer seitlichen Parklücke.
- Fig. 2: Eine schematische Darstellung eines Signalverlaufs von Abstandssignalen von eine Parklücke begrenzenden Objekten und von Abstandssignalen eines Bordsteins sowie eines hieraus ermittelten Flankenverlaufs.
- Fig. 3: Eine schematische Darstellung des Signalverlaufs von Abstandssignalen von eine Parklücke begrenzenden Objekten und von Abstandssignalen eines Bordsteins aus Fig. 2 sowie eines erfindungsgemäß korrigierten Flankenverlaufs.

### Ausführungsform der Erfindung

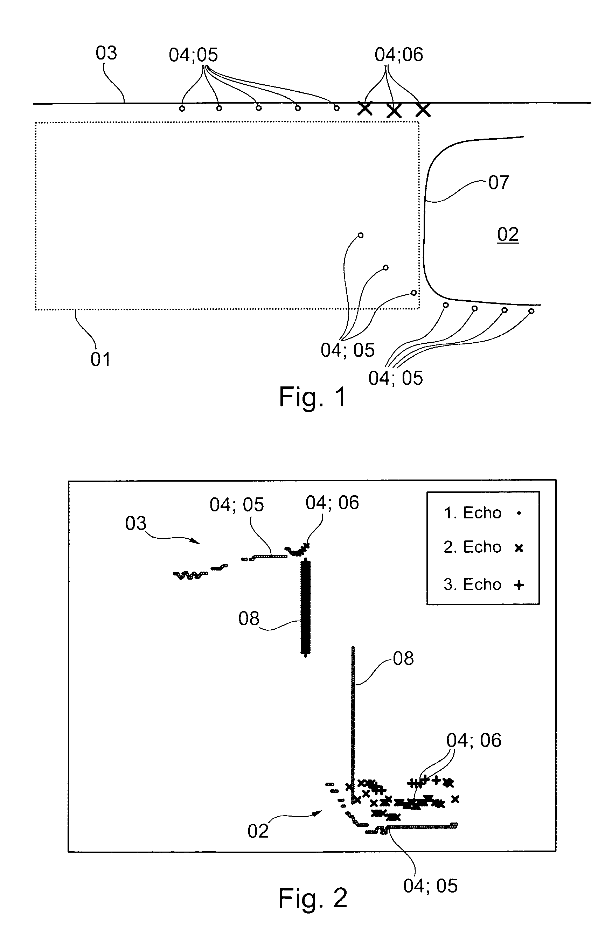

Eine in Fig. 1 dargestellte Parksituation zeigt eine Parklücke 01, die von einem Objekt 02, beispielsweise einem parkenden Fahrzeug 02, und einem Bordstein 03 bzw. einer Bordsteinkante 03 begrenzt wird. Von Ultraschallsensoren ausgesendete Ultraschallwellen werden von die Parklücke 01 begrenzenden Objekten 02, hier dem Fahrzeug 02, und dem Bordstein 03 bzw. der Bordsteinkante 03 in Form von Echos 04 reflektiert. Dabei treten erste Echos 05 auf, welche insbesondere im Bereich einer durch das Objekt 02 bzw. Fahrzeug 02 gebildeten Flanke eine Streuung aufweisen, die nicht dem tatsächlichen Ende 07 bzw. je nach Betrachtungsrichtung Beginn 07 der Parklücke 01 entsprechen. Darüber hinaus treten höhere Echos 06 auf, die beispielsweise in einem Bereich längs des Bordsteins 03 bzw. der Bordsteinkante 03, in dem der Bordstein 03 bzw. die Bordsteinkante 03 sichtbar ist, mit den ersten Echos 05 überlappen.

Erfindungsgemäß ist in einer solchen Situation ein Verfahren zur Plausibilisierung der Flankenerkennung anhand eines Bordsteinsignals vorgesehen. Dabei werden zur Flankenerkennung erhobene Sensordaten noch besser und geschickter genutzt, wodurch eine höhere Systemgenauigkeit als beim Stand der Technik erreicht wird.

Erfindungsgemäß wird neben dem Signalverlauf von Abstandssignalen von eine Parklücke begrenzenden Objekten 02 zusätzlich der Signalverlauf von Abstandssignalen des Bordsteins 03 bzw. der Bordsteinkante 03 zur Plausibilisierung betrachtet bzw. verwendet.

Vorzugsweise werden hierzu auch so genannte höhere Echos 06 verwendet, um den Verlauf des Bordsteins 03 bzw. der Bordsteinkante 03 in seiner bzw. ihrer ganzen Länge zu nutzen, also auch dann, wenn dieser bzw. diese im Verlauf von ersten Echos 05 durch die Echosignale der die Parklücke 01 begrenzenden Objekte 02 verdeckt wird.

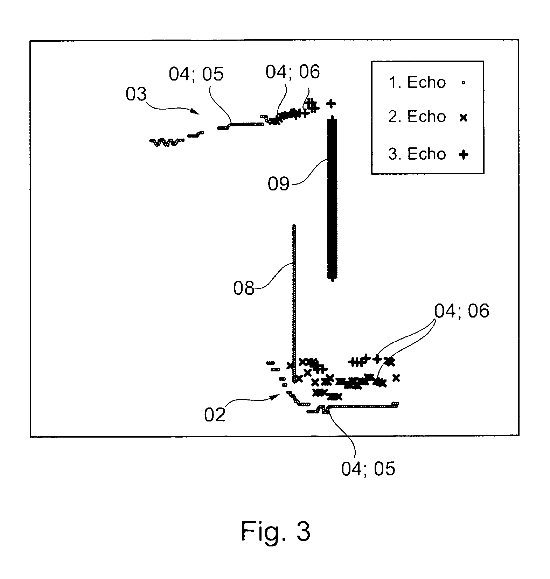

Eine hinterlegte Grundlogik ist vorzugsweise folgende:
- Grundsätzlich wird die Flanke 08 bzw. der Flankenverlauf wie bisher anhand des Signalverlaufs der Abstandssignale der die Parklücke 01 begrenzenden Objekte 02 ermittelt (Fig. 2).
- Wird nun ein Bordstein 03 bzw. eine Bordsteinkante 03 ermittelt, wird überprüft, wie weit dessen bzw. deren Verlauf im Signalverlauf zu sehen ist. Dazu werden vorzugsweise sowohl die ersten 05, als auch höhere Echos 06 berücksichtigt.
- Liegt die ermittelte Flanke 08 im Bereich des sichtbaren Bordsteins 03, wird die Flanke 09 an die Grenze des Bordsteinsignals verschoben (Fig. 3). Liegt die Grenze außerhalb, bleibt die Flanke 08 unverändert.

Vorteile ergeben sich unter anderem dadurch, dass das Streuen der Flankenerkennung bzw. des Flankenverlaufs in die Parklücke 01 hinein bei Lücken 01 mit Bordstein 03 begrenzt werden kann. Dadurch kann der vorhandene Parkraum besser genutzt werden, was insbesondere bei kurzen Parklücken 01 von großem Vorteil ist. Dadurch wird die Genauigkeit eines Einparksystems insgesamt verbessert.

## Patentansprüche

1. Verfahren zur Flankenerkennung von eine Parklücke (01) begrenzenden Objekten durch Sensoren, bei dem mit den Sensoren ein Signalverlauf von Abstandssignalen von die Parklücke (01) begrenzenden Objekten (02) ermittelt wird, **dadurch gekennzeichnet, dass** eine Plausibilisierung der Flankenerkennung anhand eines Bordsteinsignals durchgeführt wird, indem neben dem Signalverlauf der Abstandssignale von eine Parklücke (01) begrenzenden Objekten (02) zusätzlich ein Signalverlauf von Abstandssignalen eines Bordsteins (03) zur Plausibilisierung betrachtet wird, wobei ein Flankenverlauf zunächst anhand des Signalverlaufs der Abstandssignale der die Parklücke (01) begrenzenden Objekte (02) ermittelt wird, anschließend ein Bordstein (03) ermittelt wird, dann überprüft wird, ob der ermittelte Bordstein (03) sichtbar ist, und sofern eine ermittelte Flanke (08) im Bereich eines sichtbaren Bordsteins (03) und an einer Grenze der Objekte (02) liegt, die Flanke (09) an eine Grenze des sichtbaren Bordsteins (03) verschoben wird, und sofern die ermittelte Flanke (08) außerhalb des Bereichs des sichtbaren Bordsteins (03) liegt, die Flanke (08) unverändert an der Grenze der Objekte (02) bleibt.

2. Verfahren nach Anspruch 1, **dadurch gekennzeichnet, dass** die Sensoren Ultraschallsensoren sind.

3. Verfahren nach Anspruch 1 oder 2, **dadurch gekennzeichnet, dass** zur Betrachtung des Signalverlaufs der Abstandssignale des Bordsteins (03) auch höhere Echos (06) von den Sensoren ausgesandten und von den die Parklücke (01) begrenzenden Objekten (02) und dem Bordstein (03) reflektierten Signale, insbesondere Ultraschallwellen verwendet werden, um den Verlauf des Bordsteins (03) in seiner bzw. ihrer ganzen Länge zur Plausibilisierung zu nutzen, auch dann, wenn dieser im Verlauf von ersten Echos (05) durch die Echosignale der die Parklücke (01) begrenzenden Objekte (02) verdeckt wird.

4. Verfahren nach Anspruch 3, **dadurch gekennzeichnet, dass** zur Überprüfung, wie weit der Verlauf des Bordsteins (03) im Signalverlauf zu sehen ist, sowohl die ersten (05), als auch höhere Echos (06) berücksichtigt werden.

5. Computerprogrammprodukt gespeichert auf einem computerverwendbaren Medium, umfassend computerlesbare Programmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 4 veranlassen.

## Claims

1. Method of using sensors to detect edges of objects delimiting a parking space (01), in which the sensors determine a signal profile of distance signals of objects (02) delimiting the parking space (01), **characterized in that** a plausibility check on the edge detection is carried out with the aid of a kerb signal by additionally considering a signal profile of distance signals of a kerb (03) for plausibility as well as the signal profile of the distance signals from objects (02) delimiting a parking space (01), an edge profile firstly being determined with the aid of the signal profile of the distance signals of the objects (02) delimiting the parking space (01), the kerb (03) subsequently being determined, after which it is checked whether the determined kerb (03) is visible, and if a determined edge (08) is situated in the region of a visible kerb (03) and at a boundary of the objects (02), the edge (09) is displaced to a boundary of the visible kerb (03), and if the determined edge (08) is situated outside the region of the visible kerb (03), the edge (08) remains unchanged at the boundary of the objects (02).

2. Method according to Claim 1, **characterized in that** the sensors are ultrasonic sensors.

3. Method according to Claim 1 or 2, **characterized in that** in order to consider the signal profile of the distance signals of the kerb (03), use is also made of higher echoes (06) of the signals, in particular ultrasonic waves, which are emitted by the sensors and reflected from the objects (02) delimiting the parking space (01) and from the kerb (03), in order to employ the profile of the kerb (03) to check for plausibility along the entire length thereof, even when the echo signals of the objects (02) delimiting the parking space (01) cover the same in the profile of first echoes (05).

4. Method according to Claim 3, **characterized in that** in order to check the extent to which the profile of the kerb (03) can be seen in the signal profile both the first (05) and higher echoes (06) are considered.

5. Computer program product stored on a computer-usable medium, comprising computer-readable program means which, when the computer program product is executed on a microprocessor with associated memory means or on a computer, cause it to carry out a method according to one of Claims 1 to 4.

## Revendications

1. Procédé de reconnaissance des flancs d'objets délimitant un emplacement de stationnement (01), par des capteurs, dans lequel l'évolution de signaux de distance d'objets (02) délimitant l'emplacement de stationnement (01) est déterminée par les capteurs, **caractérisé en ce que**
une plausibilisation de la détection des flancs est réalisée à l'aide d'un signal de bordure en prenant en compte l'évolution de signaux de distance d'une bordure (03) en plus de l'évolution des signaux de distance d'objets (02) délimitant un emplacement de stationnement (01),
l'évolution des flancs étant déterminée d'abord à l'aide de l'évolution des signaux de distance des objets (02) qui délimitent l'emplacement de stationnement (01),
une bordure (03) étant ensuite détectée avec ensuite vérification si la bordure (03) détectée est visible, et si un flanc (08) déterminé est situé au niveau d'une bordure (03) visible et à une frontière des objets (02), le flanc (09) est déplacé sur la frontière de la bordure (03) visible et tant que le flanc (08) déterminé est situé à l'extérieur de la zone de la bordure (03) visible, le flanc (08) à la frontière des objets (02) reste inchangé.

2. Procédé selon la revendication 1, **caractérisé en ce que** les capteurs sont des capteurs à ultrasons.

3. Procédé selon les revendications 1 ou 2, **caractérisé en ce que** pour évaluer l'évolution des signaux de distance de la bordure (03), des échos supérieurs (06) sont également émis par les capteurs et les signaux réfléchis par les objets (02) délimitant l'emplacement de stationnement (01) et la bordure (03), en particulier des signaux à ultrasons, sont utilisés, pour utiliser l'évolution de la bordure (03) sur toute sa longueur pour la plausibilisation, même lorsqu'elle est couverte au niveau du premier échos(05) par les signaux d'écho des objets (02) qui délimitent l'emplacement de stationnement (01).

4. Procédé selon la revendication 3, **caractérisé en ce que** tant les premiers échos (05) que les échos supérieurs (06) sont pris en compte pour vérifier dans quelle mesure l'évolution de la bordure (03) est visible dans l'évolution des signaux.

5. Produit de programme informatique conservé sur un support utilisable par ordinateur et comprenant des moyens de programme lisibles par ordinateur et qui, lorsque le produit de programme informatique est exécuté sur un microprocesseur doté de moyens de mémoire ou sur un ordinateur, permettent à ces derniers d'exécuter un procédé selon l'une des revendications 1 à 4.
